Europäisches Patentamt

(19) European Patent Office   (11) Numéro de publication:   **0 187 593**
Office européen des brevets   **A1**

(12)   DEMANDE DE BREVET EUROPEEN

(21) Numéro de dépôt: 85402535.0   (51) Int. Cl.⁴: **F 21 M 7/00**
**F 16 B 11/00**
(22) Date de dépôt: 18.12.85

(30) Priorité: 21.12.84 FR 8419762

(43) Date de publication de la demande:
16.07.86 Bulletin 86/29

(84) Etats contractants désignés:
DE IT

(71) Demandeur: CIBIE PROJECTEURS
17, rue Henri Gautier
F-93012 Bobigny(FR)

(72) Inventeur: Perrin, Pierre
8, Avenue de Québec
F-93150 Le Blanc Mesnil(FR)

(72) Inventeur: Bachetta, Jean
23, avenue de Coeuilly
F-94430 Chennevieres(FR)

(74) Mandataire: Martin, Jean-Jacques et al,
Cabinet REGIMBEAU 26, Avenue Kléber
F-75116 Paris(FR)

(54) Perfectionnements aux projecteurs de véhicules automobiles à glace collée.

(57) L'invention concerne un procédé d'assemblage pour projecteurs dans lequel on réunit par collage le rebord d'une glace mince au bord homologue d'une pièce homologue.
Il est caractérisé en ce que l'on donne aux sections coopérantes assemblées par collage (10,20) − (30,20) − (50,60) des profils qui ménagent entre elles un volume d'expansion situé à l'intérieur du contour externe des pièces assemblées, ce volume d'expansion se prêtant ainsi à accueillir un excès éventuel de colle, sans qu'on puisse le remarquer à l'observation du projecteur.

L'invention concerne aussi les projecteurs ainsi assemblés.

FIG.1

1

"Perfectionnements aux projecteurs de véhicules automobiles à glace collée"

La présente invention concerne les projecteurs à glace collée pour véhicules automobiles.

De tels projecteurs sont connus depuis longtemps : leur glace est assemblée au contour d'ouverture de la pièce homologue par un cordon de colle ou de mastic. Selon le cas, la "pièce homologue" peut être un boîtier formant cuvelage et renfermant les pièces optiques, ou bien un miroir réflecteur constituant avec la glace ce que l'on appelle un bloc optique.

Dans la technique connue, les glaces en verre sont munies d'un pied, servant à l'assemblage. La glace comporte une face frontale et un rebord latéral périphérique. Le pied de glace se présente comme un prolongement du rebord de glace spécialement destiné à l'assemblage et coopérant à cet effet avec un organe homologue de la pièce homologue. Le plus souvent, le pied de glace comporte une partie axiale et une partie radiale formant un épaulement derrière lequel est disposé le cordon de colle assemblant la glace à la pièce homologue.

La colle d'assemblage est de préférence une résine époxyde ou un plastisol, un polyuréthane, un silicone.

La mise en place du cordon de colle et l'assemblage se font, bien entendu, sur des machines automatiques.

Un excès de colle est toujours nécessaire pour des raisons de sécurité ; l'excès de colle s'accumule sans inconvénient car le pied de glace cache à l'observateur regardant de l'avant du projecteur toute la zone de collage. Peu importe, par conséquent que le pied de glace soit plus ou moins revêtu d'un excès de colle présent sur sa surface tournée vers l'arrière.

La présente invention se propose la mise en oeuvre de glaces sans pied, plus faciles à fabriquer et moins coûteuses : une telle glace, uniformément mince, possède uniquement une partie frontale et un rebord périphérique, de même épaisseur. Le rebord périphérique est prolongé sans rupture de ligne par la pièce homologue qui lui est assemblée. Les essais conduits par la Demanderesse ont montré que de telles glaces étaient économiquement réalisables et satisfaisantes à l'usage, tout en augmentant l'ouverture des projecteurs et en leur donnant une ligne "filante" plus esthétique.

Cependant, un problème se pose pour l'assemblage du rebord périphérique de la glace et de la pièce homologue.

En effet, dans des projecteurs de ce type, la zone d'assemblage reste toujours visible à l'observateur et il devient alors indispensable que des bavures dues aux excès de colle n'apparaissent pas.

Les essais conduits par la Demanderesse pour résoudre ce problème ont montré le caractère impraticable de deux solutions. Tout d'abord, il est pratiquement impossible de supprimer les bavures de colle dans le cadre d'une production industrielle de série. Ensuite, si l'on tente de supprimer tout excès de colle, on perd toute sécurité de l'assemblage, car, statistiquement, il existe toujours un jeu variable de montage de telle sorte que la quantité de colle minimale théoriquement nécessaire sera insuffisante dans bien des cas pour assurer la résistance de l'assemblage.

Pour un assemblage de ce genre, le brevet britannique GB 2 114 279 a déjà proposé de ménager à l'extérieur des surfaces assemblées, des réservoirs externes qui servent à recueillir les excès de colle ; mais cette solution n'est pas du tout satisfaisante, car lesdits excès de colle sont largement visibles à l'observateur, ce qui rend le mode d'assemblage proposé inapplicable à l'assemblage d'une glace mince sans pied.

3

La présente invention propose une autre solution à ce problème.

Selon l'invention, pour assembler le rebord d'une glace mince comportant une partie frontale et un rebord périphérique latéral à une pièce homologue de projecteur, on donne aux sections coopérantes, assemblées par collage, des profils qui ménagent entre elles un volume interne d'expansion situé à l'intérieur du contour externe des pièces assemblées, ce volume d'expansion se prêtant ainsi à accueillir un excès éventuel de colle, sans qu'on puisse le remarquer à l'observation du projecteur.

L'invention concerne ainsi un projecteur comprenant une glace mince comportant une partie frontale et un rebord périphérique latéral, et une pièce homologue, ces deux parties étant assemblées par collage selon une ligne filante continue, caractérisé en ce que les bords collés des deux pièces ont des profils ménageant entre eux lors du collage et de l'assemblage un volume interne d'expansion propre à accueillir tout excès de colle.

D'autres caractéristiques et avantages de l'invention apparaîtront à la lecture de la description qui va suivre en se référant aux dessins annexés.

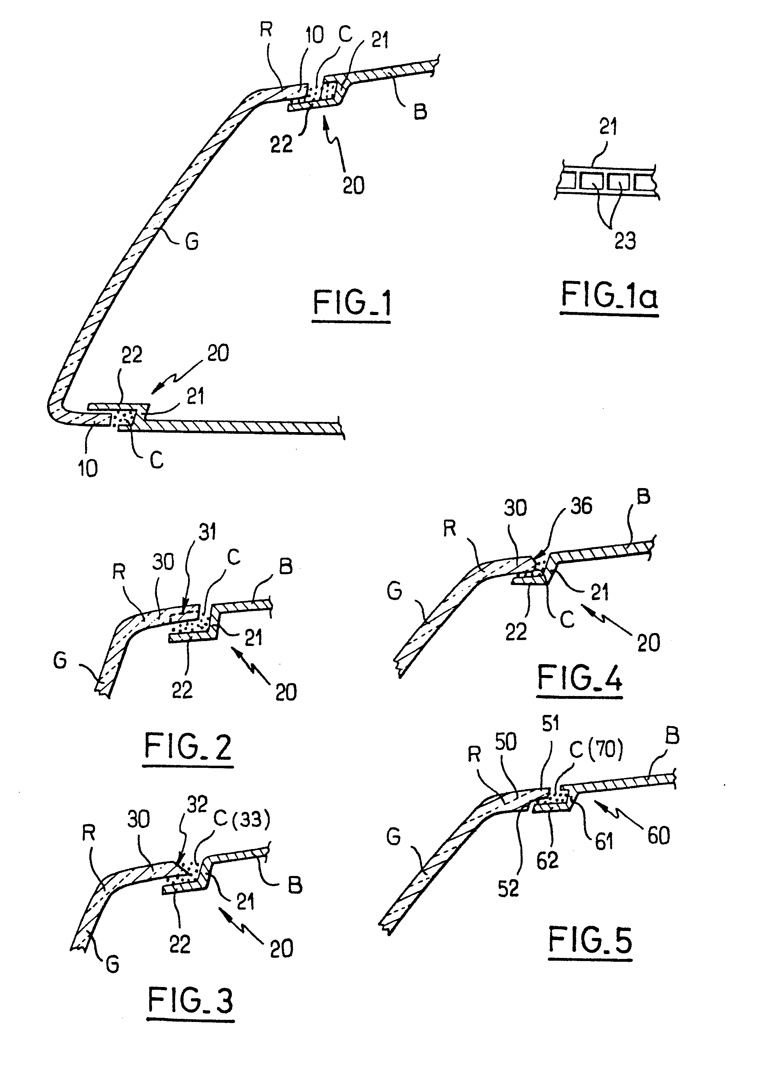

Sur les dessins annexés, les figures 1 à 5 représentent des coupes verticales schématiques d'un projecteur à glace filante représenté totalement (figure 1) ou partiellement (figures 2, 3, 4 et 5). La figure 1a représente en vue de côté un détail de la figure 1.

Dans tous les modes de réalisation, il s'agit d'assembler, selon un assemblage à ligne filante, une glace en verre G et un boîtier en matière plastique B. La glace en verre comprend une partie frontale F et un rebord périphérique R. Le problème est d'assembler par collage, sans solution de continuité, et sans remontée

4

de colle apparente, les bords homologues du rebord de glace R et du boîtier B.

Dans un premier mode de réalisation représenté aux figures 1 et 1a, la glace présente un bord rectiligne axial 10, et le boîtier B présente un bord incurvé en L, 20. Le bord 20 comprend ainsi une partie radiale rentrante 21, et une partie axiale 22 s'étendant parallèlement au bord 10 de la glace et à l'intérieur de celle-ci. Enfin, à l'intérieur de la partie radiale 21 sont ménagés des alvéoles internes 23 bien visibles sur la figure 1a qui représente en  vue de côté le détail de constitution du boîtier, et plus particulièrement une section au droit de la face avant de la partie 21.

Avec une telle structure, le mode d'assemblage est facile à comprendre : de façon connue en elle-même, un cordon de colle C est déposé sur la face externe de la partie 22. La glace G est ensuite assemblée au boîtier B, le bord 10 entourant la partie 22 du bord 20 du boîtier. La colle C est partiellement repoussée jusqu'au positionnement final des deux pièces. Tout excès de colle vient remplir les alvéoles 23 sans déborder à l'extérieur du contour général des deux pièces assemblées. La colle est figurée en pointillés.

On décrira plus brièvement les autres modes de réalisation.

Dans le cas de la figure 2, le boîtier comporte comme précédemment un bord 20 comportant une partie radiale rentrante 21 et une partie axiale 22. Le rebord R de la glace G comporte un bord droit 30 muni d'une rainure ou encoche interne 31 à son extrémité. L'assemblage se fait comme précédemment, et c'est cette fois la rainure 31 qui sert à accueillir l'excès de colle C.

Dans le mode de réalisation de la figure 3, le bord 20 du boîtier garde la même structure (partie radiale 21, partie axiale 22). Le bord de glace 30 est muni d'une face de bout coupée en biseau 32. La face avant de la partie radiale 21 et la face en biseau 32 définissent une rainure à section en V 33.

La colle C est directement déposée dans la rainure 33. Tout excès de colle reste à l'intérieur de ladite rainure 33.

Le mode de réalisation de la figure 4 est voisin de celui de la figure 2 et les mêmes références y ont été utilisées. L'encoche 31 de la glace est toutefois remplacée par un dégagement externe 36 permettant l'expansion de tout excès de colle.

Dans le mode de réalisation de la figure 5, le bord de glace 50 comporte une partie axiale droite 51 et un épaulement 52. Le bord de boîtier 60 comporte une partie radiale rentrante 61 et une partie axiale 62 susceptible de coopérer avec l'épaulement 52 dans un engagement de butée. A l'assemblage, les deux pièces viennent ainsi en butée l'une contre l'autre, ce qui ménage entre elles un espacement interne 70 formant espace d'encollage de 1 à 5 mm de large. La colle C y est directement déposée en quantité appropriée, mais sans débordement en dehors du contour externe des deux pièces.

Bien entendu, l'invention n'est pas limitée aux modes de réalisation décrits, mais s'étend à toutes variantes conformes à son esprit, en particulier à toutes variantes obtenues par simple inversion de la structure des deux pièces assemblées.

REVENDICATIONS

1.- Procédé d'assemblage d'un projecteur dans lequel on réunit par collage le rebord d'une glace mince au bord homologue d'une pièce homologue, caractérisé en ce que l'on donne aux sections coopérantes assemblées par collage (10,20 - 30,20 - 50,60) des profils qui ménagent entre elles un volume interne d'expansion situé à l'intérieur du contour externe des pièces assemblées, ce volume d'expansion se prêtant ainsi à accueillir un excès éventuel de colle, sans qu'on puisse le remarquer à l'observation du projecteur.

2.- Projecteur comprenant une glace mince (G) comportant une partie frontale (F) et un rebord périphérique latéral (R), et une pièce homologue (B), ces deux parties étant assemblées par un cordon de colle C selon une ligne filante continue, caractérisé en ce que les bords collés (10,20 - 30,20 - 50,60) des deux pièces ont des profils ménageant entre eux lors du collage et de l'assemblage un volume d'expansion propre à accueillir tout excès de colle.

3.- Projecteur selon la revendication 1, caractérisé en ce que l'une des parties a un bord droit (10, 30, 50) et l'autre un bord incurvé en L (20, 60) comportant une partie radiale rentrante (21, 61) et une partie axiale (22, 62) coopérant avec ledit bord droit.

4.- Projecteur selon la revendication 3, caractérisé en ce que ladite partie radiale rentrante (21) est munie d'alvéoles (23).

5.- Projecteur selon la revendication 3, caractérisé en ce que ledit bord droit (30) est muni d'une rainure interne (31).

6.- Projecteur selon la revendication 3, caractérisé en ce que ledit bord droit (30) est muni d'un biseau externe (32).

7.- Projecteur selon la revendication 3, caractérisé en ce que ledit bord droit (30) est muni d'un dégagement externe (36).

8.- Projecteur selon la revendication 3, caractérisé en ce que ledit bord droit 50 comporte une partie axiale 51 et un épaulement 52, la partie axiale 62 dudit bord incurvé 60 venant en butée contre ledit épaulement 52 pour ménager ainsi un espace d'encollage 70.

1 / 1

0187593

FIG_1

FIG_1a

FIG_2

FIG_4

FIG_3

FIG_5

**0187593**

Office européen
des brevets

**RAPPORT DE RECHERCHE EUROPEENNE**

Numero de la demande

EP 85 40 2535

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| D,X | GB-A-2 114 279 (SHANKS) <br> * Page 2, lignes 102-124 * | 1,2,8 | F 21 M 7/00 <br> F 16 B 11/00 |
| A | US-A-4 240 131 (ALBRECHT) <br> * Colonne 4, lignes 29-51; figures 6-7 * | 1,5,8 | |
| A | US-A-2 750 491 (ANDERSON) <br> * Colonne 2, lignes 45-48 * | 1 | |
| A | US-A-4 372 459 (NEWMAN) <br> * Figure 3 * | 1-3 | |

---

DOMAINES TECHNIQUES
RECHERCHES (Int. Cl.4)

F 21 M
F 16 B
F 21 V

Le présent rapport de recherche a été établi pour toutes les revendications

| Lieu de la recherche <br> LA HAYE | Date d'achèvement de la recherche <br> 20-03-1986 | Examinateur <br> FOUCRAY R.B.F. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82